# EUROPEAN PATENT SPECIFICATION

(11) **EP 2 945 432 B1**
(45) Date of publication and mention of the grant of the patent: **07.11.2018**
(21) Application number: 14754969.5
(22) Date of filing: 08.02.2014
(51) Int. Cl.: H04W 8/18, H04W 48/16, H04W 84/04, H04W 84/12, H04W 48/18

(54) **NETWORK SELECTION METHOD AND USER EQUIPMENT**
NETZWERKAUSWAHLVERFAHREN UND BENUTZERVORRICHTUNG
PROCÉDÉ DE SÉLECTION DE RÉSEAU, ET ÉQUIPEMENT D'UTILISATEUR

(30) Priority: 25.02.2013 CN 201310058220
(43) Date of publication of application: 18.11.2015
(73) Proprietor: Huawei Device Co., Ltd., Shenzhen, Guangdong 518129 (CN)
(72) Inventor: DUAN, Xiaoyan, Shenzhen Guangdong 518129 (CN); OUYANG, Guowei, Shenzhen Guangdong 518129 (CN); GAO, Chenliang, Shenzhen Guangdong 518129 (CN); JIN, Hui, Shenzhen Guangdong 518129 (CN); YI, Qiang, Shenzhen Guangdong 518129 (CN)
(74) Representative: Maiwald Patent- und Rechtsanwaltsgesellschaft mbH
(86) International application number: PCT/CN2014/071902
(87) International publication number: WO 2014/127702

(56) References cited:
- EP-A1- 1 968 274
- WO-A1-2009/127238
- WO-A1-2011/038771
- WO-A1-2011/082833
- WO-A1-2011/134496
- WO-A1-2013/006254
- CN-A- 101 577 909
- CN-A- 102 007 800

## Description

### TECHNICAL FIELD

Embodiments of the present invention relate to communications technologies, and in particular, to a network selection method and user equipment.

### BACKGROUND

To implement control or impact by an operator on user equipment (User Equipment, UE for short) with respect to selection of an access network, for example, a wireless local area network (Wireless Local Area Network, WLAN for short), and a 3rd Generation Partnership Project (The 3rd Generation Partnership Project, 3GPP for short), a 3GPP standard specifies that an access network discovery selection function (Access Network Discovery and Selection Function, ANDSF for short) server is disposed on a core network, so as to provide an access network discovery and selection function policy (ANDSF policy) for the user equipment.

In the prior art, when user equipment accesses a WLAN by using a non-3GPP subscription, and receives a ANDSF policy by using a 3GPP network, the user equipment periodically checks the ANDSF policy, so as to determine whether to reselect a WLAN access network. If the ANDSF policy indicates that another WLAN network is preferentially selected, the user equipment ends a connection to a current WLAN network and accesses a new WLAN network.

However, in some scenarios, the user equipment is not expected to reselect a WLAN network or to change a manner of accessing a WLAN, for example, a case in which a tariff for accessing, by the user equipment, a WLAN network by using a non-3GPP subscription is relatively low, but a tariff for accessing the WLAN by using a 3GPP subscription is relative high. Therefore, a manner of accessing a new WLAN network according to the ANDSF policy may conflict with a current access manner of the user equipment by using the non-3GPP subscription, and the new WLAN network accessed according to the ANDSF policy may conflict with a WLAN network accessed by using the non-3GPP subscription.

WO 2009/127 238 A1 discloses a technique for access network selection in a network environment where both 3GPP and non-3GPP access networks are available to provide access for a user equipment to a 3GPP core network. By providing a new path of communication between a first access selection function on the network side and a second access selection function implemented by the user equipment, access selection loops are avoided.

WO 2011/082 833 A1 discloses how multiple access network selection policies that are available when a user equipment is roaming between networks can be amalgamated into one prioritized access network selection policy.

WO 2011/134 496 A1 pertains to the synchronization of network selection information, such as ANDSF information, between user equipment and an ANDSF server on a network.

WO 2011/038 771 A1 discloses how conflicts can be avoided when multiple ANDSF servers attempt to update different parts of an ANDSF management object stored on a user equipment.

WO 2013/006 254 A1 discloses the provision of fine-grained network-set policies by which a user equipment may select one or more of a plurality of available access networks to perform data communication.

### SUMMARY

The invention is set out in the appended set of claims.

The embodiments and/or examples of the following description which are not covered by the appended claims are considered as not being part of the present invention.

Embodiments of the present invention provide a network selection method and user equipment, which are used to resolve the following problems in the prior art: a problem that a WLAN network access device reselected according to an ANDSF policy may conflict with a WLAN access device currently accessed by the user equipment by using a non-3GPP subscription, and a problem that a manner, which is of accessing a WLAN network by the user equipment and uses a 3GPP subscription instead of the non-3GPP subscription, may conflict with a manner in which the user equipment is expected to access the WLAN by using the non-3GPP subscription.

According to a first aspect, an embodiment of the present invention provides a network selection method, including:
accessing a first wireless local area network WLAN access device by using a non-3rd Generation Mobile Communication 3GPP subscription, and attaching to a 3GPP core network by using a 3GPP access network;
determining whether a 3GPP subscription has a higher priority than the non-3GPP subscription; and
accessing, if the 3GPP subscription has a higher priority than the non-3GPP subscription, a WLAN by using the 3GPP subscription.

The priorities of the 3GPP subscription and the non-3GPP subscription are determined autonomously by the user equipment, and
the user equipment is configured to transmit different IP data streams belonging to different access point names and/or to different applications by a WLAN accessed by using the 3GPP subscription, and by the 3GPP access network.

In a first possible implementation manner of the first aspect, before the determining whether a 3GPP subscription has a higher priority than the non-3GPP subscription, the method includes:
receiving a first access network discovery and selection function ANDSF policy sent by the 3GPP core network, and selecting a second WLAN access device according to the first ANDSF policy; and
the accessing, if the 3GPP subscription has a higher priority than the non-3GPP subscription, a WLAN by using the 3GPP subscription includes:
   if the 3GPP subscription has a higher priority than the non-3GPP subscription, ending a connection to the first WLAN access device, and accessing the second WLAN access device by using the 3GPP subscription.

With reference to the first possible implementation manner of the first aspect, in a second possible implementation manner, the method further includes:
if the 3GPP subscription does not have a higher priority than the non-3GPP subscription, disabling or ignoring the first ANDSF policy.

With reference to the second possible implementation manner of the first aspect, in a third possible implementation manner, after the disabling or ignoring the first ANDSF policy, the method further includes:
re-enabling the first ANDSF policy after the connection to the first WLAN access device ends.

In a fourth possible implementation manner of the first aspect, the accessing a first WLAN access device by using a non-3GPP subscription, and attaching to a 3GPP core network by using a 3GPP access network includes:
accessing the first WLAN access device by using the non-3GPP subscription, and then attaching to the 3GPP core network by using the 3GPP access network; and
the accessing, if the 3GPP subscription has a higher priority than the non-3GPP subscription, a WLAN by using the 3GPP subscription includes:
   determining whether the first WLAN access device can be accessed by using the 3GPP subscription, and if yes, accessing the first WLAN access device by using the 3GPP subscription.

With reference to the fourth possible implementation manner of the first aspect, in a fifth possible implementation manner, the method further includes:
receiving a second ANDSF policy sent by the 3GPP core network, and if the 3GPP subscription does not have a higher priority than the non-3GPP subscription, disabling or ignoring the second ANDSF policy.

With reference to the fifth possible implementation manner of the first aspect, in a sixth possible implementation manner, after the disabling or ignoring the second ANDSF policy, the method further includes:
enabling the second ANDSF policy after a connection to the first WLAN access device ends.

With reference to the first aspect or any one of the first possible implementation manner to the sixth possible implementation manner of the first aspect, in a seventh possible implementation manner, the determining whether a 3GPP subscription has a higher priority than the non-3GPP subscription includes:
acquiring user preference information about whether to access a WLAN by preferentially using a 3GPP subscription; or
acquiring a subscription priority that is in a management object and about whether to access a WLAN by preferentially using a 3GPP subscription; or
sending, to a user, prompt information about whether to access a WLAN by preferentially using a 3GPP subscription, and receiving selection information that is input according to the prompt information by the user.

According to a second aspect, an embodiment of the present invention provides user equipment, including:
a first connection module, configured to access a first wireless local area network WLAN access device by using a non-3rd Generation Mobile Communication 3GPP subscription;
a second connection module, configured to attach to a 3GPP core network by using a 3GPP access network;
a determining module, configured to determine whether a 3GPP subscription has a higher priority than the non-3GPP subscription; and
a third connection module, configured to: if the 3GPP subscription has a higher priority than the non-3GPP subscription, access a WLAN by using the 3GPP subscription.

The determining module is configured to autonomously determine the priorities of the 3GPP subscription and the non-3GPP subscription, and
the user equipment is configured to transmit different IP data streams belonging to different access point names and/or to different applications by a WLAN accessed by using the 3GPP subscription, and by the 3GPP access network.

In a first possible implementation manner of the second aspect, the user equipment further includes:
a first receiving module, configured to receive a first access network discovery and selection function ANDSF policy sent by the 3GPP core network; and
a selecting module, configured to select a second WLAN access device according to the first ANDSF policy; and
the third connection module is configured to: if the 3GPP subscription has a higher priority than the non-3GPP subscription, end a connection to the first WLAN access device, and access the second WLAN access device by using the 3GPP subscription.

With reference to the first possible implementation manner of the second aspect, in a second possible implementation manner, the user equipment includes:
a first disabling module, configured to: if the 3GPP subscription does not have a higher priority than the non-3GPP subscription, disable or ignore the first ANDSF policy.

With reference to the second possible implementation manner of the second aspect, in a third possible implementation manner, the user equipment further includes:
a first re-enabling module, configured to: if the first ANDSF policy is disabled or ignored, re-enable the first ANDSF policy after the connection to the first WLAN access device ends.

In a fourth possible implementation manner of the second aspect, the first connection module is further configured to:
first access the first WLAN access device by using the non-3GPP subscription;
the second connection module is configured to: after the first connection module first accesses the first WLAN access device by using the non-3GPP subscription, then attach to the 3GPP core network by using the 3GPP access network;
the determining module is further configured to determine whether the first WLAN access device can be accessed by using the 3GPP subscription; and
the third connection module is configured to: if the determining module determines that the first WLAN access device can be accessed by using the 3GPP subscription, access the first WLAN access device by using the 3GPP subscription.

With reference to the fourth possible implementation manner of the second aspect, in a fifth possible implementation manner, the user equipment further includes:
a second receiving module, configured to receive a second access network discovery and selection function ANDSF policy sent by the 3GPP core network; and
a second disabling module, configured to: if the 3GPP subscription does not have a higher priority than the non-3GPP subscription, disable or ignore the second ANDSF policy.

With reference to the fifth possible implementation manner of the second aspect, in a sixth possible implementation manner, the user equipment further inclides:
a second re-enabling module, configured to: if the second ANDSF policy is disabled or ignored, enable the second ANDSF policy after a connection to the first WLAN access device ends.

With reference to the second aspect or any one of the first possible implementation manner to the sixth possible implementation manner of the second aspect, in a seventh possible implementation manner, the determining module is specifically configured to:
acquire user preference information about whether to access a WLAN by preferentially using a 3GPP subscription; or
acquire a subscription priority that is in a management object and about whether to access a WLAN by preferentially using a 3GPP subscription; or
send, to a user, prompt information about whether to access a WLAN by preferentially using a 3GPP subscription, and receive selection information that is input according to the prompt information by the user.

According to the network selection method and the user equipment that are provided in the embodiments of the present invention, the user equipment accesses a first WLAN network access device by using a non-3GPP subscription, and attaches to a 3GPP core network by using a 3GPP access network; and when determining that a 3GPP subscription has a higher priority than the non-3GPP subscription in accessing a WLAN network access device, the user equipment accesses a WLAN by using the 3GPP subscription. In this case, the following problems are avoided: a WLAN network access device reselected by the user equipment according to an ANDSF policy may conflict with a WLAN access device currently accessed by the user equipment by using the non-3GPP subscription, and a manner, which is of accessing a WLAN network by the user equipment and uses the 3GPP subscription instead of the non-3GPP subscription, may conflict with a manner in which the user equipment is expected to access the WLAN by using the non-3GPP subscription. In addition, in the embodiments, the user equipment autonomously determines priorities of the 3GPP subscription and the non-3GPP subscription; and only when the user equipment accesses the WLAN in a 3GPP subscription manner after determining that the 3GPP subscription has a higher priority, the user equipment needs to execute the ANDSF policy sent by the 3GPP core network, so that the ANDSF policy does not need to be frequently checked in a periodic manner, thereby avoiding an increase in power consumption of the user equipment caused by unnecessary reselection of a WLAN access device.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a flowchart of Embodiment 1 of a network selection method according to the present invention;
FIG. 2A is a signaling flowchart of Embodiment 2 of a network selection method according to the present invention;
FIG. 2B is a decision-making flowchart of user equipment in FIG. 2A;
FIG. 3A is a signaling flowchart of Embodiment 3 of a network selection method according to the present invention;
FIG. 3B is a decision-making flowchart of user equipment in FIG. 3A;
FIG. 4 is a schematic architectural diagram of Embodiment 1 of user equipment according to the present invention;
FIG. 5 is a schematic architectural diagram of Embodiment 2 of user equipment according to the present invention;
FIG. 6 is a schematic architectural diagram of Embodiment 3 of user equipment according to the present invention; and
FIG. 7 is a schematic architectural diagram of Embodiment 4 of user equipment according to the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

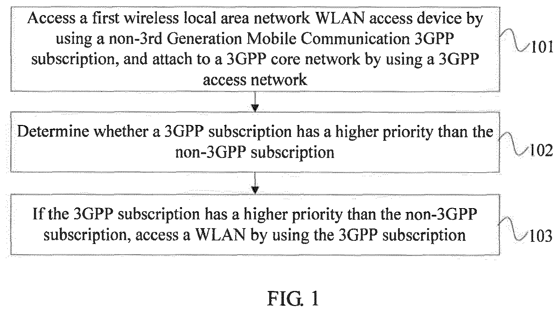

FIG. 1 is a flowchart of Embodiment 1 of a network selection method according to the present invention. This embodiment is applicable to a scenario in which when user equipment accesses a first WLAN access device by using a non-3GPP subscription and attaches to a 3GPP core network by using a 3GPP access network, the user equipment needs to reselect a WLAN access device or change a current manner of accessing the access device. This embodiment is executed by user equipment, and specifically, this embodiment includes the following steps:
Step 101: Access a first wireless local area network WLAN access device by using a non-3rd Generation Mobile Communication 3GPP subscription, and attach to a 3GPP core network by using a 3GPP access network.

The user equipment may access a WLAN network in two manners. In the first manner, the user equipment may access the first WLAN network access device by using the non-3GPP subscription such as a user name plus a password and in an authentication manner provided by a WLAN, where the first access device is, for example, an access point (Access Point, AP for short) or a hotspot (hotspot) in the WLAN network, and may be identified by using a service set identifier (Service Set Identifier, SSID for short), a basic service set identifier (Basic Service Set Identifier, BSSID for short), a homogenous extended service set ID (Homogenous Extended Service Set ID, HESSID for short), and/or the like. In the second manner, according to an interworking standard that is between a 3GPP network and a WLAN network and specified by standard organizations, such as 3GPP and Wi-Fi (Wireless Fidelity, Wireless Fidelity, which refers to a wireless local area network WLAN technology) Alliance, the user equipment may use its subscription to a 3GPP network, that is, the user equipment may base on an international mobile subscriber identity (International Mobile Subscriber Identity, IMSI for short), another identifier or number, or the like that can uniquely indicate the equipment or a user in the 3GPP network, so as to access a WLAN network access device to perform communication. In this step, the user equipment accesses the first WLAN network access device by using the non-3GPP subscription, and attaches to the 3GPP core network by using the 3GPP access network.

Step 102: Determine whether a 3GPP subscription has a higher priority than the non-3GPP subscription.

According to user preference information; or a subscription priority in a subscription management object; or by sending, to a user, prompt information about whether to access a WLAN by preferentially using a 3GPP subscription, and receiving selection information that is input according to the prompt information by the user; or the like, the user equipment determines a manner that is of accessing a WLAN network and that has a higher priority, that is, determines priorities for accessing, by using the 3GPP subscription and the non-3GPP subscription, a WLAN network access device.

Step 103: If the 3GPP subscription has a higher priority than the non-3GPP subscription, access a WLAN by using the 3GPP subscription.

When determining that the 3GPP subscription has a higher priority than the non-3GPP subscription in accessing the WLAN network, the user equipment accesses the WLAN by using the 3GPP subscription. Specifically, the user equipment determines, according to an ANDSF policy delivered by the 3GPP core network, that a second WLAN network access device needs to be reselected; and when determining that the 3GPP subscription has a higher priority than the non-3GPP subscription in accessing a WLAN network access device, the user equipment accesses the second WLAN access device by using the 3GPP subscription. Alternatively, because the user equipment first accesses the first WLAN access device in a non-3GPP subscription manner, and then attaches to the 3GPP core network, the user equipment accesses the current first access device by using the 3GPP subscription when determining that the 3GPP subscription has a higher priority than the non-3GPP subscription in accessing a WLAN network access device.

According to the network selection method provided in this embodiment of the present invention, user equipment accesses a first WLAN network access device by using a non-3GPP subscription, and attaches to a 3GPP core network by using a 3GPP access network; and when determining that a 3GPP subscription has a higher priority than the non-3GPP subscription in accessing a WLAN network access device, the user equipment accesses the WLAN network access device by using the 3GPP subscription. In this case, the following problems are avoided: a WLAN network access device reselected by the user equipment according to an ANDSF policy may conflict with a WLAN access device currently accessed by the user equipment by using the non-3GPP subscription, and a manner, which is of accessing a WLAN network by the user equipment and uses the 3GPP subscription instead of the non-3GPP subscription, may conflict with a manner in which the user equipment is expected to access the WLAN by using the non-3GPP subscription. In addition, in this embodiment, the user equipment autonomously determines priorities of the 3GPP subscription and the non-3GPP subscription; and only when the user equipment accesses the WLAN in a 3GPP subscription manner after determining that the 3GPP subscription has a higher priority, the user equipment needs to execute the ANDSF policy sent by the 3GPP core network, so that the ANDSF policy does not need to be frequently checked in a periodic manner, thereby avoiding an increase in power consumption of the user equipment caused by unnecessary reselection of a WLAN access device.

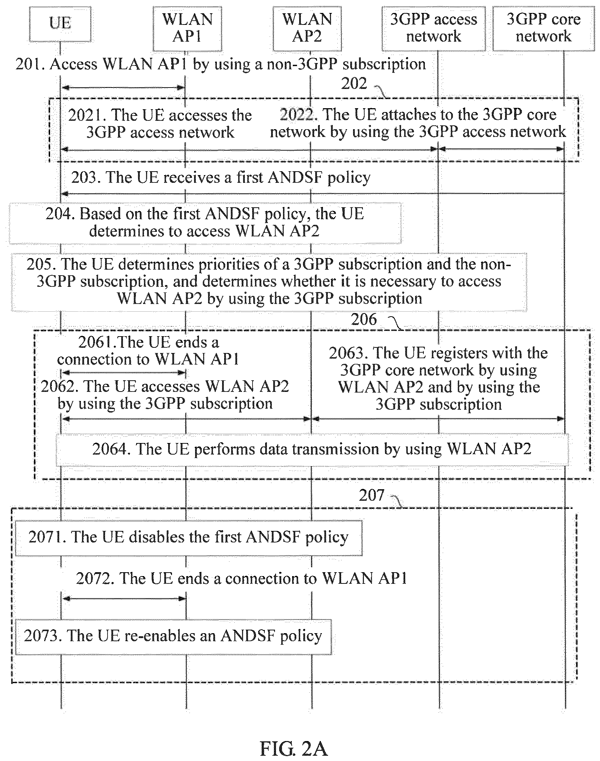

FIG. 2A is a signaling flowchart of Embodiment 2 of a network selection method according to the present invention. This embodiment is applicable to a scenario in which when user equipment receives a first access network discovery and selection function ANDSF policy sent by a 3GPP core network and selects a second WLAN access device according to the first ANDSF policy, and after it is determined that a 3GPP subscription has a higher priority than a non-3GPP subscription, the user equipment needs to reselect a WLAN network access device. In this embodiment, AP1 is a first access device, AP2 is a second access device, and UE accesses AP1 by using a non-3GPP subscription, and attaches to a 3GPP core network by using a 3GPP access network, that is, the user equipment also attaches to the 3GPP core network by using the 3GPP access network when the user equipment accesses WLAN AP1, or before or after the user equipment accesses WLAN AP1. Specifically, this embodiment includes the following steps:
Step 201: The UE accesses WLAN AP1 by using the non-3GPP subscription.

Step 202: The UE attaches to a 3GPP core network by using the 3GPP access network.

Specifically, this step includes:
Step 2021: The UE accesses the 3GPP access network.

Step 2022: The UE attaches to the 3GPP core network by using the 3GPP access network.

For a specific manner of attaching to the 3GPP network by the UE by using the 3GPP access network, reference may be made to the prior art, and details are not described herein again.

Step 203: The UE receives a first ANDSF policy.

Specifically, a 3GPP network device is disposed in the 3GPP core network, such as an ANDSF server, where the ANDSF server stores network information of a preferred WLAN network so as to provide a WLAN network discovery and selection policy for the UE. In this step, the UE receives the first ANDSF policy sent by the ANDSF server of the 3GPP core network.

Step 204: Based on the first ANDSF policy, the UE determines to access WLAN AP2.

Specifically, in a position A and/or during a time period B, WLAN AP2 has a higher priority than WLAN AP1 in the first ANDSF policy, and therefore, the UE determines to access WLAN AP2.

Step 205: The UE determines priorities of a 3GPP subscription and the non-3GPP subscription, and determines whether it is necessary to access WLAN AP2 by using the 3GPP subscription; if necessary, performs step 206; if unnecessary, performs step 207.

The UE determines the priorities of the 3GPP subscription and the non-3GPP subscription so as to determine whether it is necessary to access WLAN AP2 by using the 3GPP subscription, that is, access a new WLAN network access device by using the 3GPP subscription. Specifically, the UE may acquire access preference information that is preset by a user and about whether to access a WLAN by preferentially using a 3GPP subscription; or send, to a user, prompt information about whether to access a WLAN by preferentially using a 3GPP subscription, for example, the UE prompts, in a manner of popping up a dialog box, the user to select whether to access WLAN AP2 by preferentially using the 3GPP subscription, and then receives selection information that is input according to the prompt information by the user, so as to determine whether it is necessary to select a WLAN network access device by using the 3GPP subscription.

In addition, for user equipment that supports Hotspot2.0, the UE may also determine, according to a subscription priority (subscription priority) in a configured device management object (Management Object, MO for short), whether it is necessary to select a WLAN network access device by using a 3GPP subscription. Specifically, in this embodiment, if it is determined according to the first ANDSF policy that AP2 has a higher priority than AP1, and the UE queries the subscription priority in the MO. When WLAN network AP2 that is accessed by using the 3GPP subscription has a higher priority than WLAN network AP1 that is accessed by using the non-3GPP subscription, the UE accesses WLAN AP2 by using the 3GPP subscription; otherwise, if the 3GPP subscription does not have a higher priority than the non-3GPP subscription, the UE accesses WLAN AP1 by continuing to use the non-3GPP subscription. In this case, because a manner of accessing a WLAN by user equipment and an accessed WLAN network access device are selected according to a Hotspot 2.0 policy, that is, according to a WLAN access network selection policy provided by an operator, a problem that the Hotspot 2.0 policy conflicts with an ANDSF policy can be resolved.

Step 206: The UE determines that it is necessary to access WLAN AP2 by using the 3GPP subscription.

In the first ANDSF policy, if WLAN AP2 has a higher priority than WLAN AP1, and the UE determines that the 3GPP subscription has a higher priority than the non-3GPP subscription, the UE accesses WLAN AP2 by using the 3GPP subscription, that is, performs step 2061 to step 2064.

Step 2061: The UE ends a connection to WLAN AP1.

The UE ends the connection, which is established based on the non-3GPP subscription, to WLAN AP1.

Step 2062: The UE accesses WLAN AP2 by using the 3GPP subscription.

Step 2063: The UE registers with the 3GPP core network by using WLAN AP2 and by using the 3GPP subscription.

In step 2062 and step 2063, that the UE accesses WLAN AP2 by using the 3GPP subscription includes that: the UE is connected to the 3GPP core network by using WLAN AP2 so that the UE completes authentication and registration on the 3GPP core network. Specifically, the 3GPP subscription includes an identifier generated based on an IMSI, for example, a network access identifier (Network Access Identifier, NAI for short) or another identifier or number that can uniquely indicate the equipment or a user in the 3GPP network. The IMSI includes mobile country code (Mobile Country Code, MCC for short), mobile network code (Mobile Network Code, MNC for short), and a mobile subscriber identification number (Mobile Subscriber Identification Number, MSIN for short). A manner of performing authentication and registration on the 3GPP network by using WLAN AP2 and by using the 3GPP subscription includes: an Extensible Authentication Protocol-subscriber identity module (Extensible Authentication Protocol-Subscriber Identity Module, EAP-SIM for short) manner, an Extensible Authentication Protocol-Authentication and Key Agreement (Extensible Authentication Protocol-Authentication and Key Agreement, EAP-AKA for short) manner, EAP-AKA' manner, and the like.

Step 2064: The UE performs data transmission by using WLAN AP2.

Specifically, the UE may transmit, based on an inter-system routing policy (Inter-System Routing Policy, ISRP for short) in the first ANDSF policy, different Internet Protocol (Internet Protocol, IP for short) data streams by using WLAN AP2 and the 3GPP access network. That is, the UE selects, according to the ISRP, the 3GPP access network and WLAN AP2 to transmit different IP data streams. For example, the UE separately transmits, by using the 3GPP access network and WLAN AP2, IP data streams that belong to different access point names (Access Point Name, APN for short) or belong to different applications.

Step 207: The UE determines that it is necessary to access WLAN AP1 by continuing to use the non-3GPP subscription.

Specifically, if determining that the 3GPP subscription does not have a higher priority than the non-3GPP subscription, the UE does not need to access WLAN AP2 by using the 3GPP subscription, but accesses WLAN AP1 by continuing to use the non-3GPP subscription, and performs step 2071 to step 2073.

Step 2071: The UE disables the first ANDSF policy.

Specifically, the UE does not execute a received ANDSF policy about WLAN access device discovery and selection, no longer periodically assesses the first ANDSF policy about WLAN access device discovery and selection according to the prior art, and does not access a new WLAN access device according to the first ANDSF policy, so as to avoid unnecessary reselection of a WLAN access device and an unnecessary change of an access manner.

Step 2072: The UE ends a connection to WLAN AP1.

Specifically, when the UE moves out of a coverage area of WLAN AP1, or when a signal of WLAN AP1 attenuates to a specific extent, or when the UE cannot perform a communications service by using WLAN AP1 due to another reason, the UE ends the connection, which is established based on the non-3GPP subscription, to WLAN AP1.

Step 2073: The UE re-enables an ANDSF policy.

Because the UE attaches to the 3GPP core network by using the 3GPP access network after the UE ends the connection, which is established based on the non-3GPP subscription, to WLAN AP1, the UE may re-enable the ANDSF policy about WLAN access device discovery and selection, so as to perform WLAN access network discovery and selection. Specifically, that the UE re-enables the ANDSF policy about WLAN access device discovery and selection may further include that: the UE receives the ANDSF policy from the 3GPP core network again, so as to update the ANDSF policy, in the UE, about WLAN access device discovery and selection.

It should be noted that, step 201 may also be performed after step 202, which is not limited in the present invention.

According to the network selection method provided in this embodiment of the present invention, when user equipment accesses a first WLAN network access device by using a non-3GPP subscription and attaches to a 3GPP core network by using a 3GPP access network, and when the user equipment needs to reselect a WLAN access device after receiving a first ANDSF policy delivered by the 3GPP core network, the user equipment may determine whether a 3GPP subscription has a higher priority than the non-3GPP subscription, that is, determine priorities of manners of accessing a WLAN network, and the user equipment determines, according to the priorities, whether to reselect a WLAN network access device, thereby avoiding a problem that a WLAN network access device determined according to an ANDSF policy conflicts with a WLAN network access device that a user currently uses and that is not expected to change. In addition, if the user equipment is user equipment that supports Hotspot 2.0, whether the 3GPP subscription has a higher priority than the non-3GPP subscription is determined according to a subscription priority of a configured MO, so that a problem that a Hotspot 2.0 policy conflicts with the ANDSF policy can be avoided.

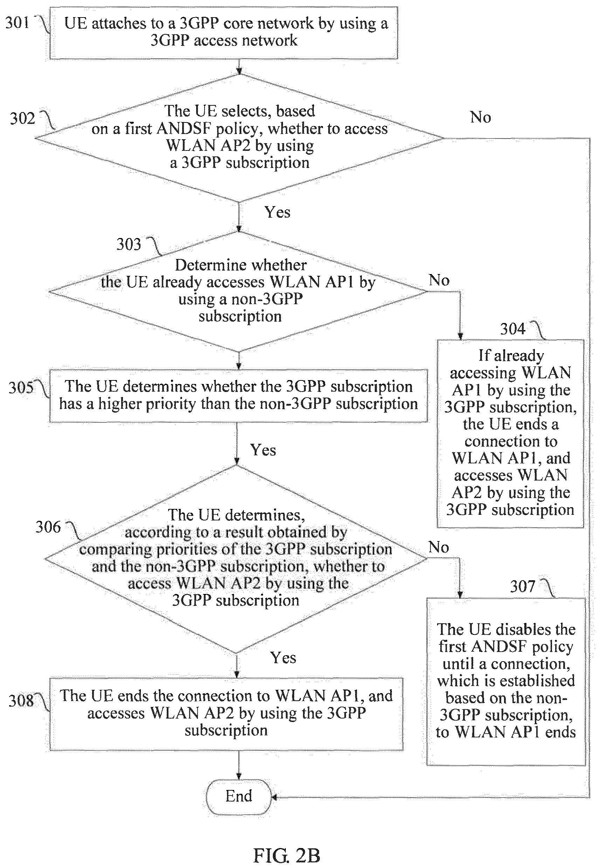

FIG. 2B is a decision-making flowchart of user equipment in FIG. 2A, and FIG. 2B is a further description for a decision-making process of the user equipment in FIG. 2A. This embodiment of the present invention is described in detail according to how the UE makes a decision. Specifically, referring to FIG. 2B, this embodiment may include the following steps:
Step 301: UE attaches to a 3GPP core network by using a 3GPP access network.

Step 302: The UE selects, based on a first ANDSF policy, whether to access WLAN AP2 by using a 3GPP subscription; if the UE selects to access WLAN AP2 by using the 3GPP subscription, perform step 303; otherwise, the method ends.

Step 303: Determine whether the UE already accesses WLAN AP1 by using a non-3GPP subscription; if the UE accesses WLAN AP1 by using the non-3GPP subscription, perform step 305; otherwise, if the user equipment already accesses WLAN AP1 by using the 3GPP subscription, perform step 304.

Specifically, the UE may determine, in any one of the following manners, whether the UE currently accesses WLAN AP1 and accesses WLAN AP1 by using the non-3GPP subscription. A variable may be set in the UE, for example, an access network subscription indication (subscription_ind_for_WL), which is used to indicate whether the UE currently accesses a WLAN by using the non-3GPP subscription. When the UE successfully accesses the WLAN network by using the non-3GPP subscription (for example, in a manner of user name + password), an indication value is set to 0, that is, subscription_ind_for_WL=0; when the UE successfully accesses the WLAN network by using the 3GPP subscription (for example, an EA-SIM, EAP-AKA, or EAP-AKA' manner), the indication value is set to 1, that is, subscription_ind_for_WL=1; when the UE is not connected to any WLAN network, the indication value is set to 2, that is, subscription_ind_for_WL=2. For the UE, subscription_ind_for_WL=2 may be set as a default value or an initial value. In this way, the UE may determine, based on the access network subscription indication, whether the UE currently accesses a WLAN network access device and accesses the WLAN network access device by using the non-3GPP subscription.

The UE may further directly determine, according to a WLAN access status of the UE and in an authentication manner, whether the UE currently accesses a WLAN network access device by using the non-3GPP subscription. Specifically, if the WLAN access status of the UE is an accessed (associated) state or a data transmission state, and an authentication manner that is based on an IMSI or another 3GPP identifier is not used, the UE currently accesses a WLAN network and accesses the WLAN network by using the non-3GPP subscription.

Step 304: If already accessing WLAN AP1 by using the 3GPP subscription, the UE ends a connection to WLAN AP1, and accesses WLAN AP2 by using the 3GPP subscription.

Step 305: The UE determines whether the 3GPP subscription has a higher priority than the non-3GPP subscription.

Step 306: The UE determines, according to a result obtained by comparing priorities of the 3GPP subscription and the non-3GPP subscription, whether to access WLAN AP2 by using the 3GPP subscription; if the 3GPP subscription has a higher priority than the non-3GPP subscription, the UE determines to access WLAN AP2 by using the 3GPP subscription, and performs step 308; otherwise, if it is unnecessary to access WLAN AP2 by using the 3GPP subscription, performs step 307.

Step 307: The UE disables the first ANDSF policy until a connection, which is established based on the non-3GPP subscription, to WLAN AP1 ends.

Step 308: The UE ends the connection to WLAN AP1, and accesses WLAN AP2 by using the 3GPP subscription.

In this embodiment, the present invention is described in detail according to how UE makes a decision. Specifically, the user equipment attaches to a 3GPP core network by using a 3GPP access network, and the user equipment may autonomously determine whether to access a WLAN network access device by using a non-3GPP subscription. When the user equipment needs to reselect a WLAN access device after receiving a first ANDSF policy delivered by the 3GPP core network, the user equipment may first determine whether a 3GPP subscription has a higher priority than the non-3GPP subscription, that is, determine priorities of manners of accessing a WLAN network access device; and determine, according to the priorities, whether to reselect a WLAN network access device, thereby avoiding a problem that a WLAN network access device provided by an ANDSF policy conflicts with a WLAN network access device that a user currently uses and that is not expected to change.

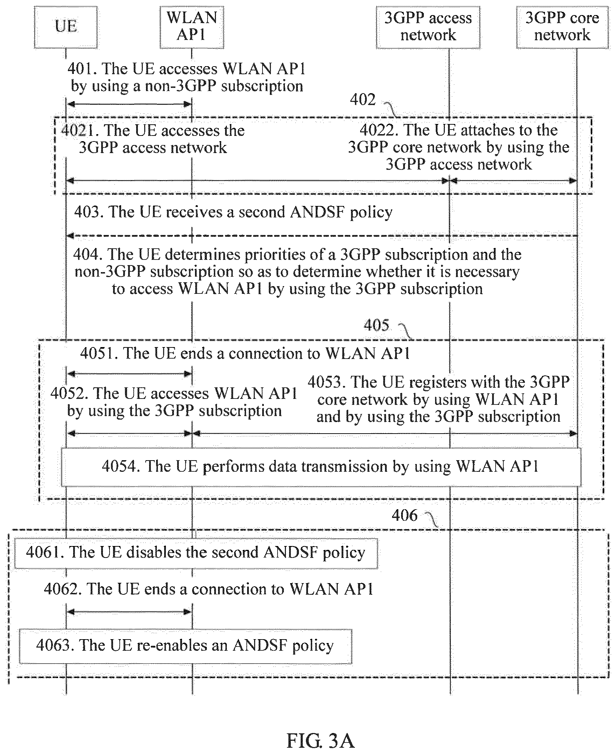

FIG. 3A is a signaling flowchart of Embodiment 3 of a network selection method according to the present invention. This embodiment is applicable to a scenario in which user equipment determines whether a 3GPP subscription has a higher priority than a non-3GPP subscription, that is, determines priorities of manners of accessing a WLAN network access device; and determines, according to the priorities, whether to change a current manner of accessing the WLAN network access device. In this embodiment, AP1 is a first access device, and after accessing AP1 by using a non-3GPP subscription, UE attaches to a 3GPP core network by using a 3GPP access network. Specifically, this embodiment includes the following steps:
Step 401: The UE accesses WLAN AP1 by using the non-3GPP subscription.

Step 402: The UE attaches to the 3GPP core network by using the 3GPP access network.

Specifically, this step includes:
Step 4021: The UE accesses the 3GPP access network.

Step 4022: The UE attaches to the 3GPP core network by using the 3GPP access network.

For a specific manner of attaching to the 3GPP network by the UE by using the 3GPP access network, reference may be made to the prior art, and details are not described herein again.

Step 404: The UE determines priorities of a 3GPP subscription and the non-3GPP subscription so as to determine whether it is necessary to access WLAN AP1 by using the 3GPP subscription; if it is necessary to access WLAN AP1 by using the 3GPP subscription, performs step 405; otherwise, if it is unnecessary to access WLAN AP1 by using the 3GPP subscription, accesses, by continuing to use the current non-3GPP subscription, WLAN AP1 to perform communication, that is, performs step 406.

Because the UE first accesses WLAN AP1 by using the non-3GPP subscription, and then attaches to the 3GPP core network by using the 3GPP access network; in this case, the UE is triggered to change a manner of accessing WLAN AP1. In this embodiment, the UE first determines the priorities of the 3GPP subscription and the non-3GPP subscription, that is, determines priorities of manners of accessing a WLAN network access device; and then determines whether to access WLAN AP1 by using the 3GPP subscription, that is, change a current manner of accessing the WLAN network access device. Similar to step 205 shown in FIG. 2A, in this step, the UE may also determine, whether it is necessary to access WLAN AP1 by using the 3GPP subscription, in the following manners: acquiring access preference information that is preset by a user and about whether to access a WLAN network access device by preferentially using a 3GPP subscription; or sending, to a user, prompt information about whether to access a WLAN access device by preferentially using a 3GPP subscription, and receiving selection information of the user; or when the user equipment is user equipment that supports Hotspot2.0, querying a subscription priority of an MO so as to determine whether it is necessary to access WLAN AP1 by using the 3GPP subscription.

Step 405: The UE determines that it is necessary to access WLAN AP1 by using the 3GPP subscription.

Specifically, if determining that the 3GPP subscription has a higher priority than the non-3GPP subscription, and determining that it is necessary to access WLAN AP1 by using the 3GPP subscription, the UE performs step 4051 to step 4054.

Step 4051: The UE ends a connection to WLAN AP1.

The UE ends the connection, which is established based on the non-3GPP subscription, to WLAN AP1.

Step 4052: The UE accesses WLAN AP1 by using the 3GPP subscription.

Step 4053: The UE registers with the 3GPP core network by using WLAN AP1 and by using the 3GPP subscription.

Step 4054: The UE performs data transmission by using WLAN AP 1.

Specifically, for a process of performing step 4051 to step 4054, reference may be made to a process of performing step 2061 to step 2064 in FIG. 2A, and details are not described herein again.

Step 406: The UE determines to access WLAN AP1 by continuing to use the non-3GPP subscription.

In addition, optionally, in this embodiment, after attaching to the 3GPP network by using the 3GPP access network, the UE may further receive a second ANDSF policy sent by an ANDSF server of the 3GPP network, that is, step 403 is further included, that is step 403 with a dashed arrow in the figure. Step 403 is specifically as follows:

Step 403: The UE receives a second ANDSF policy.

In the foregoing steps, whether the UE needs to change a current manner of accessing a WLAN network is triggered because the UE first accesses WLAN AP1 by using the non-3GPP subscription, and then attaches to the 3GPP core network by using the 3GPP access network, Therefore, this step is optional, and in a practical scenario, this step may be selectively performed as required. If this step is performed during the foregoing process, the user equipment may further determine, according to the received second ANDSF policy, whether it is necessary to select a new WLAN network access device. Specifically, reference may be made to FIG. 2A and FIG. 2B, and details are not described herein again.

Optionally, if step 403 is performed in this embodiment, that is, the UE receives the second ANDSF policy sent by a network device of the 3GPP core network, when the UE determines that it is unnecessary to access WLAN AP1 by using the 3GPP subscription, that is, when a current manner of accessing a WLAN network does not change, step 406 specifically includes:

Step 4061: The UE disables the second ANDSF policy.

Specifically, the UE does not execute the received second ANDSF policy about WLAN access device discovery and selection, no longer periodically assesses the second ANDSF policy about WLAN access device discovery and selection according to the prior art, and does not access a new WLAN access device according to the second ANDSF policy, so as to avoid unnecessary reselection of a WLAN access device and an unnecessary change of an access manner.

Step 4062: The UE ends a connection to WLAN AP1.

Specifically, when the UE moves out of a coverage area of WLAN API, or when a signal of WLAN AP1 attenuates to a specific extent, or when the UE cannot perform a communications service by using WLAN AP1 due to another reason, the UE ends the connection, which is established based on the non-3GPP subscription, to WLAN AP1.

Step 4063: The UE re-enables an ANDSF policy.

Specifically, the UE may re-enable the ANDSF policy about WLAN access device discovery and selection after the UE ends the connection, which is established based on the non-3GPP subscription, to WLAN AP1, so as to perform WLAN access device discovery and selection. Specifically, that the UE re-enables the ANDSF policy about WLAN access device discovery and selection may further include that: the UE receives the ANDSF policy from the 3GPP core network again, so as to update the ANDSF policy, in the UE, about WLAN access device discovery and selection.

According to the network selection method provided in this embodiment of the present invention, after first accessing WLAN AP1 by using a non-3GPP subscription, and then attaching to a 3GPP core network by using a 3GPP access network, user equipment may determine whether a 3GPP subscription has a higher priority than the non-3GPP subscription, that is, determine priorities of manners of accessing a WLAN network access device; and determine, according to the priorities, whether it is necessary to change a current manner of accessing the WLAN access device, thereby avoiding a problem that the user equipment is forced to access a current WLAN network by using the 3GPP subscription.

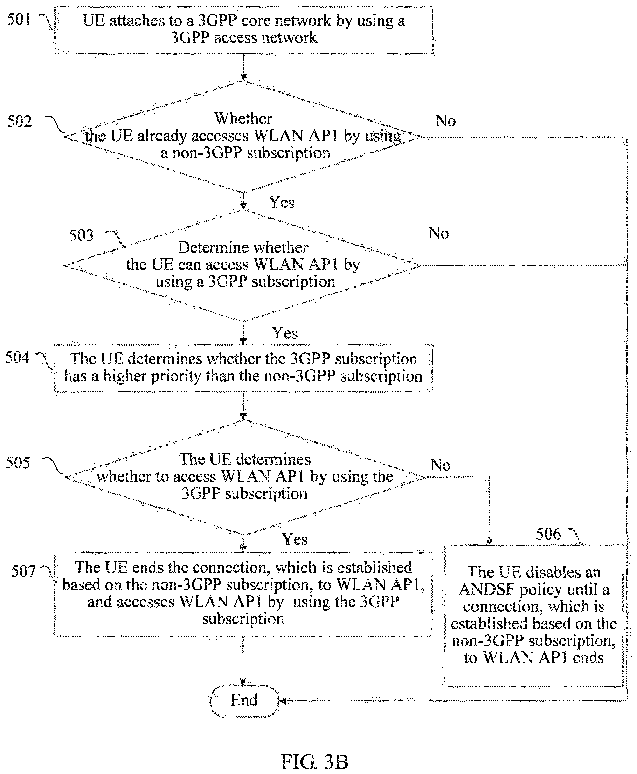

FIG. 3B is a decision-making flowchart of user equipment in FIG. 3A, and FIG. 3B is a further description for a decision-making process of the user equipment in FIG. 2A. This embodiment of the present invention is described in detail according to how the UE makes a decision. Specifically, referring to FIG. 3B, this embodiment may include the following steps:
Step 501: UE attaches to a 3GPP core network by using a 3GPP access network.

Step 502: Determine whether the UE already accesses WLAN AP1 by using a non-3GPP subscription; if the UE accesses WLAN AP1 by using the non-3GPP subscription, perform step 503; otherwise, if the user equipment already accesses WLAN AP1 by using a 3GPP subscription or the UE is not connected to any WLAN network access device, the method ends.

Step 503: Determine whether the UE can access WLAN AP1 by using the 3GPP subscription; if the UE can access WLAN AP1 by using the 3GPP subscription, perform step 504; otherwise, if the UE cannot access WLAN AP1 by using the 3GPP subscription, the method ends.

The UE may determine, in any one of the following manners, whether a WLAN network currently accessed by the UE can be accessed by using the 3GPP subscription. For example, the UE may establish and maintain a table of a WLAN access network and a subscription corresponding to the WLAN access network, where the table includes a WLAN network having a subscription, and subscription information that is in this network and can be used by the UE, such as an authentication manner and a key. Table 1 is a comparison table of a WLAN access device and a subscription of the WLAN access device that are provided in this embodiment.

**Table 1**

| **WLAN network access devices** | **Subscriptions/Credentials** |
|---|---|
| WLAN AP1/SSID1 | 3GPP subscription 1 |
| | Non-3GPP subscription 1 |
| WLAN AP2/SSID2 | Non-3GPP subscription 2 |
| WLAN AP3/SSID3 | 3GPP subscription 3 |

With reference to Table 1, for example, a WLAN network access device may be WLAN AP1 indicated by SSID1, WLAN AP2 indicated by SSID2, or WLAN AP3 indicated SSID3. WLAN AP1 has two types of subscriptions, and the user equipment may access WLAN AP1 by using the 3GPP subscription, that is, 3GPP subscription 1, or the user equipment may access WLAN AP1 by using the non-3GPP subscription, that is, non-3GPP subscription 1. Likewise, the user equipment may access WLAN AP2 by using non-3GPP subscription 2, and the user equipment may access WLAN AP3 by using 3GPP subscription 3. In this step, the user equipment determines, by using the established and maintained comparison table of a WLAN access device and a subscription of the WLAN access device, whether the currently accessed WLAN can be accessed by using the 3GPP subscription.

In addition, a subscription management object (Subscription MO) may be configured inside the user equipment, for example, a subscription management object specified by a Hotspot2.0 standard, where the subscription management object includes subscription information of a WLAN network that can be accessed by the UE, so that the user equipment can determine, by querying the subscription management object, whether the user equipment can access WLAN AP1 by using the 3GPP subscription.

The user equipment may further query, by using the Access Network Query Protocol (Access Network Query Protocol, ANQP for short) specified in the Institute of Electrical and Electronics Engineers (Institute of Electrical and Electronics Engineers, IEEE for short) 802.11u, information about a 3GPP network, such as 3GPP cellular network information (3GPP Cellular Network information) and a network access identifier realm list (NAI Realm List), that interworks with a WLAN network access device, such as WLAN AP1. If the information, obtained by the user equipment by means of query, about the interworking 3GPP network includes information matching the 3GPP subscription (for example, an IMSI) of the user equipment, for example, a public land mobile network (Public Land Mobile Network, PLMN for short) or an NAI that matches the IMSI of the user equipment, it indicates that the user equipment can access the current WLAN network by using the 3GPP subscription.

Step 504: The UE determines whether the 3GPP subscription has a higher priority than the non-3GPP subscription.

Step 505: The UE determines, according to a result obtained by comparing priorities of the 3GPP subscription and the non-3GPP subscription, whether to access WLAN AP1 by using the 3GPP subscription; if the UE determines to access WLAN AP1 by using the 3GPP subscription, performs step 507; otherwise, if it is unnecessary to access WLAN AP1 by using the 3GPP subscription, performs step 506.

Step 506: The UE disables an ANDSF policy until a connection, which is established based on the non-3GPP subscription, to WLAN AP1 ends.

Step 507: The UE ends the connection, which is established based on the non-3GPP subscription, to WLAN AP1, and accesses WLAN AP1 by using the 3GPP subscription.

It should be noted that, step 504 may also be performed before step 503, which is not limited in the present invention.

In this embodiment, the present invention is described in detail according to how UE makes a decision. Specifically, after first accessing WLAN AP1 by using a non-3GPP subscription, and then attaching to a 3GPP core network by using a 3GPP access network, the user equipment may determine whether a 3GPP subscription has a higher priority than the non-3GPP subscription, that is, determine priorities of manners of accessing a WLAN network access device; and determine, according to the priorities, whether it is necessary to change a current manner of accessing a WLAN network access device, thereby avoiding a problem that the user equipment is forced to access the current WLAN network access device by using the 3GPP subscription.

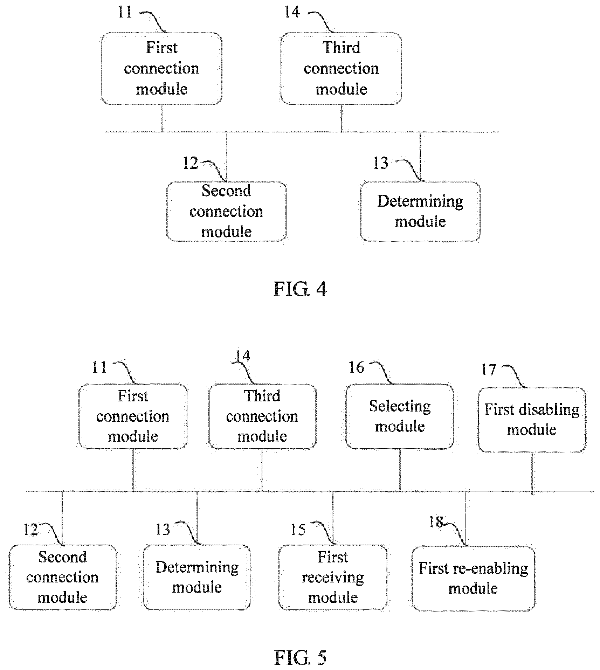

FIG. 4 is a schematic architectural diagram of Embodiment 1 of user equipment according to the present invention. As shown in FIG. 4, the user equipment in this embodiment may include:
a first connection module 11, configured to access a first wireless local area network WLAN access device by using a non-3rd Generation Mobile Communication 3GPP subscription;
a second connection module 12, configured to attach to a 3GPP core network by using a 3GPP access network;
a determining module 13, configured to determine whether a 3GPP subscription has a higher priority than the non-3GPP subscription; and
a third connection module 14, configured to: if the 3GPP subscription has a higher priority than the non-3GPP subscription, access a WLAN by using the 3GPP subscription.

The user equipment in this embodiment may be configured to perform the technical solution of the method embodiment shown in FIG. 1. The user equipment accesses the first WLAN network access device by using the first connection module and by using the non-3GPP subscription, and attaches to the 3GPP core network by using the second connection module and by using the 3GPP access network; when the determining module determines that the 3GPP subscription has a higher priority than the non-3GPP subscription in accessing a WLAN network access device, the user equipment accesses the WLAN network access device by using the third connection module and by using the 3GPP subscription. In this case, the following problems are avoided: a WLAN network access device reselected by the user equipment according to an ANDSF policy may conflict with a WLAN access device currently accessed by the user equipment by using the non-3GPP subscription, and a manner, which is of accessing a WLAN network by the user equipment and uses the 3GPP subscription instead of the non-3GPP subscription, may conflict with a manner in which the user equipment is expected to access the WLAN by using the non-3GPP subscription. In addition, an acquiring module of the user equipment autonomously acquires network access requirement information of a user in this embodiment, and the ANDSF policy does not need to be frequently checked in a periodic manner or in an event-triggered mode, thereby avoiding an increase in power consumption of the user equipment caused by unnecessary reselection of a WLAN access device.

FIG 5 is a schematic architectural diagram of Embodiment 2 of user equipment according to the present invention. As shown in FIG. 5, based on the user equipment shown in FIG. 4, the user equipment in this embodiment further includes:
a first receiving module 15, configured to receive a first access network discovery and selection function ANDSF policy sent by the 3GPP core network; and
a selecting module 16, configured to select a second WLAN access device according to the first ANDSF policy; and
the third connection module 14 is configured to: if the determining module 13 determines that the 3GPP subscription has a higher priority than the non-3GPP subscription, end a connection to the first WLAN access device, and access the second WLAN access device by using the 3GPP subscription.

Further, the user equipment may further include:
a first disabling module 17, configured to: if the 3GPP subscription does not have a higher priority than the non-3GPP subscription, disable or ignore the first ANDSF policy; and
a first re-enabling module 18, configured to: if the first ANDSF policy is disabled or ignored, re-enable the first ANDSF policy after the connection to the first WLAN access device ends.

Further, the first connection module 11 is further configured to first access the first WLAN access device by using the non-3GPP subscription;
the second connection module 12 is configured to: after the first connection module 11 first accesses the first WLAN access device by using the non-3GPP subscription, then attach the 3GPP core network by using the 3GPP access network;
the determining module 13 is further configured to determine whether the first WLAN access device can be accessed by using the 3GPP subscription; and
the third connection module 14 is configured to: if the determining module 13 determines that the first WLAN access device can be accessed by using the 3GPP subscription, access the first WLAN access device by using the 3GPP subscription.

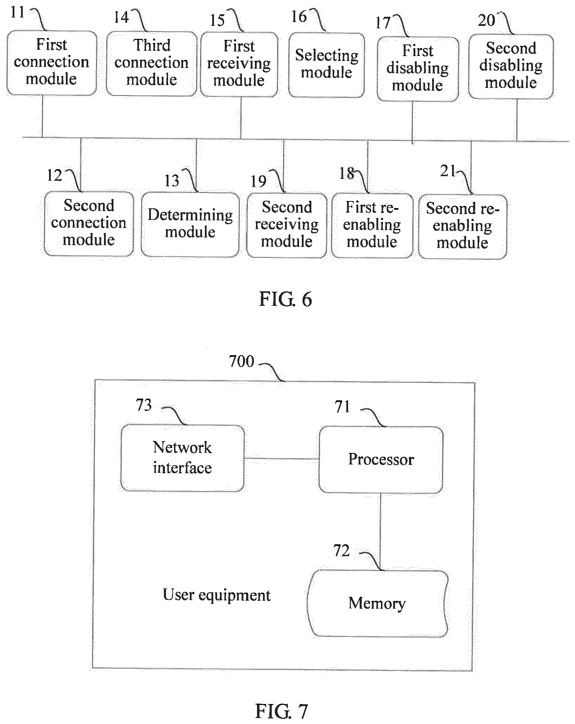

FIG. 6 is a schematic architectural diagram of Embodiment 3 of user equipment according to the present invention. As shown in FIG. 6, based on the user equipment shown in FIG. 5, the user equipment in this embodiment may further include:
a second receiving module 19, configured to receive a second access network discovery and selection function ANDSF policy sent by the 3GPP core network;
a second disabling module 20, configured to: if the 3GPP subscription does not have a higher priority than the non-3GPP subscription, disable or ignore the second ANDSF policy; and
a second re-enabling module 21, configured to: if the second ANDSF policy is disabled or ignored, enable the second ANDSF policy after a connection to the first WLAN access device ends.

Further, the determining module 13 is specifically configured to:
acquire user preference information about whether to access a WLAN by preferentially using a 3GPP subscription; or
acquire a subscription priority that is in a management object and about whether to access a WLAN by preferentially using a 3GPP subscription; or
send, to a user, prompt information about whether to access a WLAN by preferentially using a 3GPP subscription, and receive selection information that is input according to the prompt information by the user.

FIG. 7 is a schematic architectural diagram of Embodiment 4 of user equipment according to the present invention. As shown in FIG. 7, user equipment 700 in this embodiment may include: a processor 71, a memory 72, and a network interface 73, where the memory 72 stores an execution instruction; when the user equipment 700 is working, the processor 71 communicates with the memory 72; the processor 71 is connected to the network interface 73; the network interface 73 includes a network interface that communicates with another network, such as a WLAN network or a 3GPP network; the processor 71 executes the execution instruction to enable the user equipment 700 to execute the following operations:
accessing, by the user equipment 700, a first wireless local area network WLAN access device by using a non-3rd Generation Mobile Communication 3GPP subscription, and attaching to a 3GPP core network by using a 3GPP access network;
determining whether a 3GPP subscription has a higher priority than the non-3GPP subscription; and
accessing, if the 3GPP subscription has a higher priority than the non-3GPP subscription, a WLAN by using the 3GPP subscription.

Optionally, before the determining whether a 3GPP subscription has a higher priority than the non-3GPP subscription, the following operation is included:
receiving, by the user equipment 700 through the network interface 73, a first access network discovery and selection function ANDSF policy sent by the 3GPP core network, and selecting a second WLAN access device according to the first ANDSF policy.

Optionally, the accessing, if the 3GPP subscription has a higher priority than the non-3GPP subscription, a WLAN by using the 3GPP subscription includes:
if the 3GPP subscription has a higher priority than the non-3GPP subscription, ending a connection to the first WLAN access device, and accessing the second WLAN access device by using the 3GPP subscription.

Optionally, if the 3GPP subscription does not have a higher priority than the non-3GPP subscription, the first ANDSF policy is disabled or ignored.

Optionally, after the first ANDSF policy is disabled or ignored, the following operation is further included:
re-enabling the first ANDSF policy after the connection to the first WLAN access device ends.

Optionally, the accessing a first WLAN access device by using a non-3GPP subscription, and attaching to a 3GPP core network by using a 3GPP access network includes:
accessing the first WLAN access device by using the non-3GPP subscription, and then attaching to the 3GPP core network by using the 3GPP access network; and
the accessing, if the 3GPP subscription has a higher priority than the non-3GPP subscription, a WLAN by using the 3GPP subscription includes:
   determining whether the first WLAN access device can be accessed by using the 3GPP subscription, and if yes, accessing the first WLAN access device by using the 3GPP subscription.

Optionally, a second ANDSF policy sent by the 3GPP core network is received, and if the 3GPP subscription does not have a higher priority than the non-3GPP subscription, the second ANDSF policy is disabled or ignored.

Optionally, after the second ANDSF policy is disabled or ignored, the following operation is further included:
enabling the second ANDSF policy after a connection to the first WLAN access device ends.

Optionally, the determining whether a 3GPP subscription has a higher priority than the non-3GPP subscription includes:
acquiring user preference information about whether to access a WLAN by preferentially using a 3GPP subscription; or
acquiring a subscription priority that is in a management object and about whether to access a WLAN by preferentially using a 3GPP subscription; or
sending, to a user, prompt information about whether to access a WLAN by preferentially using a 3GPP subscription, and receiving selection information that is input according to the prompt information by the user.

The invention and its embodiments are not limited to the examples described in this specification but may vary within the scope of the appended claims.

## Claims

1. A network selection method for a user equipment, comprising:
accessing (101, 201, 401), by the user equipment, a first wireless local area network WLAN access device by using a non-3rd Generation Mobile Communication 3GPP subscription, and attaching (2022, 301, 4022, 501) the user equipment to a 3GPP core network by using a 3GPP access network;
determining (102, 305, 504) whether a 3GPP subscription has a higher priority than the non-3GPP subscription; and
accessing (103, 206, 308, 405, 507), by the user equipment, if the 3GPP subscription has a higher priority than the non-3GPP subscription, a WLAN by using the 3GPP subscription,
**characterized in that**
the priorities of the 3GPP subscription and the non-3GPP subscription are determined (205, 404) autonomously by the user equipment, and
the user equipment is configured to transmit different IP data streams belonging to different access point names and/or to different applications by a WLAN accessed by using the 3GPP subscription, and by the 3GPP access network .

2. The method according to claim 1, before the determining whether a 3GPP subscription has a higher priority than the non-3GPP subscription, comprising:
receiving (203) a first access network discovery and selection function ANDSF policy sent by the 3GPP core network, and selecting (204) a second WLAN access device according to the first ANDSF policy; and
the accessing (206), if the 3GPP subscription has a higher priority than the non-3GPP subscription, a WLAN by using the 3GPP subscription comprises:
if the 3GPP subscription has a higher priority than the non-3GPP subscription, ending (2061) a connection to the first WLAN access device, and accessing (2062) the second WLAN access device by using the 3GPP subscription.

3. The method according to claim 2, further comprising:
if the 3GPP subscription does not have a higher priority than the non-3GPP subscription (207), disabling or ignoring (2071) the first ANDSF policy.

4. The method according to claim 3, after the disabling or ignoring the first ANDSF policy, further comprising:
re-enabling (2073) the first ANDSF policy after the connection to the first WLAN access device ends (2072).

5. The method according to claim 1, wherein the accessing (101, 201, 401) a first WLAN access device by using a non-3GPP subscription, and attaching (2022, 301, 4022, 501) to a 3GPP core network by using a 3GPP access network comprises:
accessing (201, 401) the first WLAN access device by using the non-3GPP subscription, and then attaching (2022, 4022) to the 3GPP core network by using the 3GPP access network; and
the accessing (206, 405), if the 3GPP subscription has a higher priority than the non-3GPP subscription, a WLAN by using the 3GPP subscription comprises:
determining (503) whether the first WLAN access device can be accessed by using the 3GPP subscription, and if yes, accessing (507) the first WLAN access device by using the 3GPP subscription.

6. The method according to claim 5, further comprising:
receiving (403) a second ANDSF policy sent by the 3GPP core network, and if the 3GPP subscription does not have a higher priority than the non-3GPP subscription (406), disabling or ignoring (4061) the second ANDSF policy.

7. The method according to claim 6, after the disabling or ignoring (4061) the second ANDSF policy, further comprising:
enabling (4063) the second ANDSF policy after a connection to the first WLAN access device ends (4062).

8. The method according to any one of claims 1 to 7, wherein the determining (102, 305, 504) whether a 3GPP subscription has a higher priority than the non-3GPP subscription comprises:
acquiring user preference information about whether to access a WLAN by preferentially using a 3GPP subscription; or
acquiring a subscription priority that is in a management object and about whether to access a WLAN by preferentially using a 3GPP subscription; or
sending, to a user, prompt information about whether to access a WLAN by preferentially using a 3GPP subscription, and receiving selection information that is input according to the prompt information by the user.

9. User equipment (700), comprising:
a first connection module (11), configured to access (101, 201, 401) a first wireless local area network WLAN access device by using a non-3rd Generation Mobile Communication 3GPP subscription;
a second connection module (12), configured to attach (2022, 301, 4022, 501) to a 3GPP core network by using a 3GPP access network;
a determining module (13), configured to determine (102, 305, 504) whether a 3GPP subscription has a higher priority than the non-3GPP subscription; and
a third connection module (14), configured to: if the 3GPP subscription has a higher priority than the non-3GPP subscription, access (103, 206, 308, 405, 507) a WLAN by using the 3GPP subscription,
**characterized in that**
the determining module (13) is configured to autonomously determine (205, 404) the priorities of the 3GPP subscription and the non-3GPP subscription, and
the user equipment (700) is configured to transmit different IP data streams belonging to different access point names and/or to different applications by a WLAN accessed by using the 3GPP subscription, and by the 3GPP access network.

10. The user equipment (700) according to claim 9, further comprising:
a first receiving module (15), configured to receive (203) a first access network discovery and selection function ANDSF policy sent by the 3GPP core network; and
a selecting module (16), configured to select (204) a second WLAN access device according to the first ANDSF policy; and
the third connection module (14) is configured to: if the 3GPP subscription has a higher priority than the non-3GPP subscription, end (2061) a connection to the first WLAN access device, and access (2062) the second WLAN access device by using the 3GPP subscription.

11. The user equipment (700) according to claim 10, further comprising:
a first disabling module (17), configured to: if the 3GPP subscription does not have a higher priority than the non-3GPP subscription, disable or ignore (2071) the first ANDSF policy.

12. The user equipment (700) according to claim 11, further comprising:
a first re-enabling module (18), configured to: if the first ANDSF policy is disabled or ignored (2071), re-enable (2073) the first ANDSF policy after the connection to the first WLAN access device ends (2072).

13. The user equipment (700) according to claim 9, wherein the first connection module (11) is further configured to:
first access (201, 401) the first WLAN access device by using the non-3GPP subscription;
the second connection module (12) is configured to: after the first connection module (11) first accesses (201, 401) the first WLAN access device by using the non-3GPP subscription, then attach (2022, 4022) to the 3GPP core network by using the 3GPP access network;
the determining module (13) is further configured to determine (503) whether the first WLAN access device can be accessed by using the 3GPP subscription; and
the third connection module (14) is configured to: if the determining module (13) determines (503) that the first WLAN access device can be accessed by using the 3GPP subscription, access (507) the first WLAN access device by using the 3GPP subscription.

14. The user equipment (700) according to claim 13, further comprising:
a second receiving module (19), configured to receive (403) a second access network discovery and selection function ANDSF policy sent by the 3GPP core network; and
a second disabling module (20), configured to: if the 3GPP subscription does not have a higher priority than the non-3GPP subscription (406), disable or ignore (4061) the second ANDSF policy.

15. The user equipment (700) according to claim 14, further comprising:
a second re-enabling module (21), configured to: if the second ANDSF policy is disabled or ignored (4061), enable (4063) the second ANDSF policy after a connection to the first WLAN access device ends (4062).

## Patentansprüche

1. Netzwerkauswahlverfahren für eine Benutzervorrichtung, aufweisend:
Zugreifen (101, 201, 401) durch die Benutzereinrichtung auf eine erste drahtlose lokale Netzwerk(Wireless Local Area Network, WLAN)-Zugriffsvorrichtung unter Verwendung eines Non-3^{rd}-Generation Mobile Communication(3GPP)-Teilnehmereintrags und Verbinden (2022, 301, 4022, 501) der Benutzervorrichtung mit einem 3GPP-Kern-Netzwerk unter Verwendung eines 3GPP-Zugangsnetzes;
Ermitteln (102, 305, 504), ob ein 3GPP-Teilnehmereintrag eine höhere Priorität aufweist als der Non-3GPP-Teilnehmereintrag; und
falls der 3GPP-Teilnehmereintrag eine höhere Priorität als der Non-3GPP-Teilnehmereintrag aufweist, Zugreifen (103, 206, 308, 405, 507) durch die Benutzereinrichtung auf ein WLAN unter Verwendung des 3GPP-Teilnehmereintrags,
**dadurch gekennzeichnet, dass**
die Prioritäten des 3GPP-Teilnehmereintrags und des Non-3GPP-Teilnehmereintrags autonom durch die Benutzereinrichtung ermittelt werden (205, 404), und
die Benutzervorrichtung dazu eingerichtet ist, unterschiedliche IP-Datenströme, die zu unterschiedlichen Zugriffspunktbezeichnungen und/oder unterschiedlichen Anwendungen gehören, durch ein WLAN, auf das unter Verwendung des 3GPP-Teilnehmereintrags zugegriffen wird, und durch das 3GPP-Zugangsnetz zu übertragen.

2. Verfahren nach Anspruch 1, vor dem Ermitteln, ob ein 3GPP-Teilnehmereintrag eine höhere Priorität hat als der Non-3GPP-Teilnehmereintrag, umfassend:
Empfangen (203) einer ersten Zugangsnetz-Auffindungs- und Auswahlfunktions(Access Network Discovery and Selection Function, ANDSF)-Police, die durch das 3GPP-Kern-Netzwerk gesendet wird, und Auswählen (204) einer zweiten WLAN-Zugriffsvorrichtung gemäß der ersten ANDSF-Police; und
falls der 3GPP-Teilnehmereintrag eine höhere Priorität als der Non-3GPP-Teilnehmereintrag hat, das Zugreifen (206) auf ein WLAN unter Verwendung des 3GPP-Teilnehmereintrags umfasst:
falls der 3GPP-Teilnehmereintrag eine höhere Priorität hat als der Non-3GPP-Teilnehmereintrag, Beenden (2061) einer Verbindung mit der ersten WLAN-Zugriffsvorrichtung und Zugreifen (2062) auf die zweite WLAN-Zugriffsvorrichtung unter Verwendung des 3GPP-Teilnehmereintrags.

3. Verfahren nach Anspruch 2, ferner umfassend:
falls der 3GPP-Teilnehmereintrag keine höhere Priorität hat als der Non-3GPP-Teilnehmereintrag (207), Deaktivieren oder Ignorieren (2071) der ersten ANDSF-Police.

4. Verfahren nach Anspruch 3, nach dem Deaktivieren oder Ignorieren der ersten ANDSF-Police ferner umfassend:
Reaktivieren (2073) der ersten ANDSF-Police, nachdem die Verbindung mit der ersten WLAN-Zugriffsvorrichtung beendet (2072) ist.

5. Verfahren nach Anspruch 1, wobei das Zugreifen (101, 201, 401) auf eine erste WLAN-Zugriffsvorrichtung unter Verwendung eines Non-3GPP-Teilnehmereintrags und das Verbinden (2022, 301, 4022, 501) mit einem 3GPP-Kern-Netzwerk unter Verwendung eines 3GPP-Zugangsnetzes umfasst:
Zugreifen (201, 401) auf die erste WLAN-Zugriffsvorrichtung unter Verwendung des Non-3GPP-Teilnehmereintrags und anschließendes Verbinden (2022, 4022) mit dem 3GPP-Kern-Netzwerk unter Verwendung des 3GPP-Zugangsnetzes; und
falls der 3GPP-Teilnehmereintrag eine höhere Priorität hat als der Non-3GPP-Teilnehmereintrag, das Zugreifen (206, 405) auf ein WLAN unter Verwendung des 3GPP-Teilnehmereintrags umfasst:
Ermitteln (503), ob auf die erste WLAN-Zugriffsvorrichtung unter Verwendung des 3GPP-Teilnehmereintrags zugegriffen werden kann, und falls dies zutrifft, Zugreifen (507) auf die erste WLAN-Zugriffsvorrichtung unter Verwendung des 3GPP-Teilnehmereintrags.

6. Verfahren nach Anspruch 5, ferner aufweisend:
Empfangen (403) einer zweiten ANDSF-Police, die durch das 3GPP-Kern-Netzwerk gesendet wird, und falls der 3GPP-Teilnehmereintrag keine höhere Priorität hat als der Non-3GPP-Teilnehmereintrag (406), Deaktivieren oder Ignorieren (4061) der zweiten ANDSF-Police.

7. Verfahren nach Anspruch 6, das nach dem Deaktivieren oder Ignorieren (4061) der zweiten ANDSF-Police ferner umfasst:
Aktivieren (4063) der zweiten ANDSF-Police nachdem eine Verbindung mit der ersten WLAN-Zugriffsvorrichtung beendet (4062) ist.

8. Verfahren nach einem beliebigen der Ansprüche 1 bis 7, wobei das Ermitteln (102, 305, 504), ob ein 3GPP-Teilnehmereintrag eine höhere Priorität hat als der Non-3GPP-Teilnehmereintrag, umfasst:
Akquirieren von Benutzerpräferenzinformationen darüber, ob auf ein WLAN durch ein bevorzugtes Verwenden eines 3GPP-Teilnehmereintrags zuzugreifen ist; oder
Akquirieren einer Teilnehmereintragspriorität, die sich in einem Verwaltungsobjekt befindet und beinhaltet, ob auf ein WLAN durch ein bevorzugtes Verwenden eines 3GPP-Teilnehmereintrags zuzugreifen ist; oder
Übertragen von Promtinformationen zu einem Benutzer mit dem Inhalt, ob auf ein WLAN durch ein bevorzugtes Verwenden eines 3GPP-Teilnehmereintrags zuzugreifen ist, und Empfangen von Auswahlinformationen, die gemäß den Promtinformationen durch den Benutzer eingegeben werden.

9. Benutzervorrichtung (700), aufweisend:
ein erstes Verbindungsmodul (11), das dazu eingerichtet ist, auf eine erste drahtlose lokale Netzwerk-WLAN-Zugriffsvorrichtung unter Verwendung eines Non-3rd Generation Mobile Communication 3GPP-Teilnehmereintrags zuzugreifen (101, 201, 401);
ein zweites Verbindungsmodul (12), das dazu eingerichtet ist, sich mit einem 3GPP-Kern-Netzwerk unter Verwendung eines 3GPP-Zugangsnetzes zu verbinden (2022, 301, 4022, 501);
ein Ermittlungsmodul (13), das dazu eingerichtet ist, zu ermitteln (102, 305, 504), ob ein 3GPP-Teilnehmereintrag eine höhere Priorität hat als der Non-3GPP-Teilnehmereintrag; und
ein drittes Verbindungsmodul (14), das dazu eingerichtet ist, falls der 3GPP-Teilnehmereintrag eine höhere Priorität hat als der Non-3GPP-Teilnehmereintrag, auf ein WLAN unter Verwendung des 3GPP-Teilnehmereintrags zuzugreifen (103, 206, 308, 405, 507),
**dadurch gekennzeichnet, dass**
das Ermittlungsmodul (13) dazu eingerichtet ist, die Prioritäten des 3GPP-Teilnehmereintrags und des Non-3GPP-Teilnehmereintrags autonom zu ermitteln (205, 404), und
die Benutzervorrichtung (700) dazu eingerichtet ist, unterschiedliche IP-Datenströme, die zu unterschiedlichen Zugriffspunktbezeichnungen und/oder zu unterschiedlichen Anwendungen gehören, durch ein WLAN, auf das unter Verwendung des 3GPP-Teilnehmereintrags zugegriffen wird, und durch das 3GPP-Zugangsnetz zu übertragen.

10. Benutzervorrichtung (700) nach Anspruch 9, ferner aufweisend:
ein erstes Empfangsmodul (15), das dazu eingerichtet ist, eine erste Zugangsnetz-Auffindungs- und Auswahlfunktions(Access Network Discovery and Selection Function, ANDSF)-Police zu empfangen (203), die durch das 3GPP-Kern-Netzwerk gesendet wird; und
ein Auswahlmodul (16), das dazu eingerichtet ist, eine zweite WLAN-Zugriffsvorrichtung gemäß der ersten ANDSF-Police auszuwählen (204); und
das dritte Verbindungsmodul (14) dafür ausgelegt ist: falls der 3GPP-Teilnehmereintrag eine höhere Priorität hat als der Non-3GPP-Teilnehmereintrag, eine Verbindung mit der ersten WLAN-Zugriffsvorrichtung zu beenden (2061) und auf die zweite WLAN-Zugriffsvorrichtung unter Verwendung des 3GPP-Teilnehmereintrags zuzugreifen (2062).

11. Benutzervorrichtung (700) nach Anspruch 10, ferner aufweisend:
ein erstes Deaktivierungsmodul (17), das dazu eingerichtet ist, falls der 3GPP-Teilnehmereintrag keine höhere Priorität hat als der Non-3GPP-Teilnehmereintrag, die erste ANDSF-Police zu deaktivieren oder zu ignorieren (2071).

12. Benutzervorrichtung (700) nach Anspruch 11, ferner aufweisend:
ein erstes Reaktivierungsmodul (18), das dazu eingerichtet ist, falls die erste ANDSF-Police deaktiviert oder ignoriert (2071) ist, die erste ANDSF-Police zu reaktivieren (2073), nachdem die Verbindung mit der ersten WLAN-Zugriffsvorrichtung beendet (2072) ist.

13. Benutzervorrichtung (700) nach Anspruch 9, wobei das erste Verbindungsmodul (11) dafür ausgelegt ist:
zuerst auf die erste WLAN-Zugriffsvorrichtung unter Verwendung des Non-3GPP-Teilnehmereintrags zuzugreifen (201, 401);
das zweite Verbindungsmodul (12) dafür ausgelegt ist: nachdem das erste Verbindungsmodul (11) zuerst unter Verwendung des Non-3GPP-Teilnehmereintrags auf die erste WLAN-Zugriffsvorrichtung zugegriffen (201, 401) hat, sich anschließend unter Verwendung des 3GPP-Zugangsnetzes mit dem 3GPP-Kern-Netzwerk zu verbinden (2022, 4022);
das Ermittlungsmodul (13) ferner dazu eingerichtet ist, zu ermitteln (503), ob auf die erste WLAN-Zugriffsvorrichtung unter Verwendung des 3GPP-Teilnehmereintrags zugegriffen werden kann; und
das dritte Verbindungsmodul (14) dafür ausgelegt ist: falls das Ermittlungsmodul (13) ermittelt (503), dass auf die erste WLAN-Zugriffsvorrichtung unter Verwendung des 3GPP-Teilnehmereintrags zugegriffen werden kann, auf die erste WLAN-Zugriffsvorrichtung unter Verwendung des 3GPP-Teilnehmereintrags zuzugreifen (507).

14. Benutzervorrichtung (700) nach Anspruch 13, ferner aufweisend:
ein zweites Empfangsmodul (19), das dazu eingerichtet ist, eine zweite Zugangsnetz-Auffindungs- und Auswahlfunktions(Access Network Discovery and Selection Function, ANDSF)-Police zu empfangen (403), die durch das 3GPP-Kern-Netzwerk gesendet wird; und
ein zweites Deaktivierungsmodul (20), das dazu eingerichtet ist, die zweite ANDSF-Police zu deaktivieren oder zu ignorieren (4061) falls der 3GPP-Teilnehmereintrag keine höhere Priorität hat als der Non-3GPP-Teilnehmereintrag (406).

15. Benutzervorrichtung (700) nach Anspruch 14, ferner aufweisend:
ein zweites Reaktivierungsmodul (21), das dazu eingerichtet ist, falls die zweite ANDSF-Police deaktiviert oder ignoriert (4061) ist, die zweite ANDSF-Police zu aktivieren (4063), nachdem eine Verbindung mit der ersten WLAN-Zugriffsvorrichtung beendet (4062) ist.

## Revendications

1. Procédé de sélection de réseau pour un équipement d'utilisateur, consistant :
à avoir accès (101, 201, 401), au moyen de l'équipement utilisateur, à un premier dispositif d'accès à un réseau local sans fil (WLAN) en utilisant un abonnement non conforme à une communication mobile de troisième génération (3GPP) et à rattacher (2022, 301, 4022, 501) l'équipement utilisateur à un réseau central 3GPP en utilisant un réseau d'accès 3GPP ;
à déterminer (102, 305, 504) si un abonnement 3GPP présente ou non une priorité plus élevée que celle de l'abonnement non 3GPP ; et
à avoir accès (103, 206, 308, 405, 507), au moyen de l'équipement utilisateur, si l'abonnement 3GPP présente une priorité plus élevée que celle de l'abonnement non 3GPP, à un réseau WLAN en utilisant l'abonnement 3GPP,
**caractérisé en ce que**
les priorités de l'abonnement 3GPP et de l'abonnement non 3GPP sont déterminées (205, 404) de manière autonome par l'équipement utilisateur, et
l'équipement utilisateur est configuré pour transmettre différents flux de données IP appartenant à différents noms de point d'accès et/ou à différentes applications au moyen d'un réseau WLAN accessible en utilisant l'abonnement 3GPP et au moyen du réseau d'accès 3GPP.

2. Procédé selon la revendication 1, avant la détermination de savoir si un abonnement 3GPP présente ou non une priorité plus élevée que celle de l'abonnement non 3GPP, consistant :
à recevoir (203) une première politique de fonction de découverte et de sélection de réseau d'accès (ANDSF) envoyée par le réseau central 3GPP et à sélectionner (204) un second dispositif d'accès à un réseau WLAN en fonction de la première politique de fonction ANDSF ; et
l'accès (206), si l'abonnement 3GPP présente une priorité plus élevée que celle de l'abonnement non 3GPP, à un réseau WLAN en utilisant l'abonnement 3GPP, consiste :
si l'abonnement 3GPP présente une priorité plus élevée que celle de l'abonnement non 3GPP, à mettre fin (2061) à une connexion au premier dispositif d'accès à un réseau WLAN et à avoir accès (2062) au second dispositif d'accès à un réseau WLAN en utilisant l'abonnement 3GPP.

3. Procédé selon la revendication 2, consistant en outre :
si l'abonnement 3GPP ne présente pas une priorité plus élevée que celle de l'abonnement non 3GPP (207), à désactiver ou à ignorer (2071) la première politique de fonction ANDSF.

4. Procédé selon la revendication 3, après la désactivation ou l'ignorance de la première politique de fonction ANDSF, consistant en outre :
à réactiver (2073) la première politique de fonction ANDSF après que la connexion au premier dispositif d'accès à un réseau WLAN a pris fin (2072).

5. Procédé selon la revendication 1, dans lequel l'accès (101, 201, 401) à un premier dispositif d'accès à un réseau WLAN en utilisant un abonnement non 3GPP et le rattachement (2022, 301, 4022, 501) à un réseau central 3GPP en utilisant un réseau d'accès 3GPP consistent :
à avoir accès (201, 401) au premier dispositif d'accès à un réseau WLAN en utilisant l'abonnement non 3GPP et, ensuite, à se rattacher (2022,4022) au réseau central 3GPP en utilisant le réseau d'accès 3GPP ; et
l'accès (206, 405), si l'abonnement 3GPP présente une priorité plus élevée que celle de l'abonnement non 3GPP, à un réseau WLAN en utilisant l'abonnement 3GPP, consiste :
à déterminer (503) si le premier dispositif d'accès à un réseau WLAN peut être accessible ou non en utilisant l'abonnement 3GPP et, si tel est le cas, à avoir accès (507) au premier dispositif d'accès à un réseau WLAN en utilisant l'abonnement 3GPP.

6. Procédé selon la revendication 5, consistant en outre :
à recevoir (403) une seconde politique de fonction ANDSF envoyée par le réseau central 3GPP et, si l'abonnement 3GPP ne présente pas une priorité plus élevée que celle de l'abonnement non 3GPP (406), à désactiver ou à ignorer (4061) la seconde politique de fonction ANDSF.

7. Procédé selon la revendication 6, après la désactivation ou l'ignorance (4061) de la seconde politique de fonction ANDSF, consistant en outre :
à activer (4063) la seconde politique de fonction ANDSF après qu'une connexion au premier dispositif d'accès à un réseau WLAN a pris fin (4062).

8. Procédé selon l'une quelconque des revendications 1 à 7, dans lequel la détermination (102, 305, 504) de savoir si un abonnement 3GPP présente ou non une priorité plus élevée que celle de l'abonnement non 3GPP, consiste :
à acquérir des informations de préférence d'utilisateur indiquant s'il faut avoir accès à un réseau WLAN en utilisant préférentiellement un abonnement 3GPP ou non ; ou
à acquérir une priorité d'abonnement qui se trouve dans un objet de gestion et indiquant s'il faut avoir accès à un réseau WLAN en utilisant préférentiellement un abonnement 3GPP ou non ; ou
à envoyer, à un utilisateur, des informations d'invite indiquant s'il faut avoir accès à un réseau WLAN en utilisant préférentiellement un abonnement 3GPP ou non et à recevoir des informations de sélection qui sont entrées en fonction des informations d'invite par l'utilisateur.

9. Équipement utilisateur (700) comprenant :
un premier module de connexion (11), configuré pour avoir accès (101, 201, 401) à un premier dispositif d'accès à un réseau local sans fil (WLAN) en utilisant un abonnement non conforme à une communication mobile de troisième génération (3GPP) ;
un deuxième module de connexion (12), configuré pour se rattacher (2022, 301, 4022, 501) à un réseau central 3GPP en utilisant un réseau d'accès 3GPP ;
un module de détermination (13), configuré pour déterminer (102, 305, 504) si un abonnement 3GPP présente ou non une priorité plus élevée que celle de l'abonnement non 3GPP ; et
un troisième module de connexion (14), configuré : si l'abonnement 3GPP présente une priorité plus élevée que celle de l'abonnement non 3GPP, pour avoir accès (103, 206, 308, 405, 507) à un réseau WLAN en utilisant l'abonnement 3GPP,
**caractérisé en ce que**
le module de détermination (13) est configuré pour déterminer (205, 404) de manière autonome les priorités de l'abonnement 3GPP et de l'abonnement non 3GPP, et
l'équipement utilisateur (700) est configuré pour transmettre différents flux de données IP appartenant à différents noms de point d'accès et/ou à différentes applications au moyen d'un réseau WLAN accessible en utilisant l'abonnement 3GPP et au moyen du réseau d'accès 3GPP.

10. Équipement utilisateur (700) selon la revendication 9, comprenant en outre :
un premier module de réception (15), configuré pour recevoir (203) une première politique de fonction de découverte et de sélection de réseau d'accès (ANDSF) envoyée par le réseau central 3GPP ; et
un module de sélection (16), configuré pour sélectionner (204) un second dispositif d'accès à un réseau WLAN en fonction de la première politique de fonction ANDSF ; et
le troisième module de connexion (14) est configuré : si l'abonnement 3GPP présente une priorité plus élevée que celle de l'abonnement non 3GPP, pour mettre fin (2061) à une connexion au premier dispositif d'accès à un réseau WLAN et pour avoir accès (2062) au second dispositif d'accès à un réseau WLAN en utilisant l'abonnement 3GPP.

11. Équipement utilisateur (700) selon la revendication 10, comprenant en outre :
un premier module de désactivation (17), configuré : si l'abonnement 3GPP ne présente pas une priorité plus élevée que celle de l'abonnement non 3GPP, pour désactiver ou pour ignorer (2071) la première politique de fonction ANDSF.

12. Équipement utilisateur (700) selon la revendication 11, comprenant en outre :
un premier module de réactivation (18), configuré : si la première politique de fonction ANDSF est désactivée ou ignorée (2071), pour réactiver (2073) la première politique de fonction ANDSF après que la connexion au premier dispositif d'accès à un réseau WLAN a pris fin (2072).

13. Équipement utilisateur (700) selon la revendication 9, dans lequel le premier module de connexion (11) est en outre configuré :
d'abord pour avoir accès (201, 401) au premier dispositif d'accès à un réseau WLAN en utilisant l'abonnement non 3GPP ;
le deuxième module de connexion (12) est configuré : après que le premier module de connexion (11) a d'abord accès (201, 401) au premier dispositif d'accès à un réseau WLAN en utilisant l'abonnement non 3GPP, pour, ensuite, se rattacher (2022, 4022) au réseau central 3GPP en utilisant le réseau d'accès 3GPP ;
le module de détermination (13) est en outre configuré pour déterminer (503) si le premier dispositif d'accès à un réseau WLAN peut être accessible en utilisant l'abonnement 3GPP ou non ; et
le troisième module de connexion (14) est configuré : si le module de détermination (13) détermine (503) que l'accès au premier dispositif d'accès à un réseau WLAN est possible en utilisant l'abonnement 3GPP, pour avoir accès (507) au premier dispositif d'accès à un réseau WLAN en utilisant l'abonnement 3GPP.

14. Équipement utilisateur (700) selon la revendication 13, comprenant en outre :
un second module de réception (19) configuré pour recevoir (403) une seconde politique de fonction de découverte et de sélection de réseau d'accès (ANDSF) envoyée par le réseau central 3GPP ; et
un second module de désactivation (20), configuré : si l'abonnement 3GPP ne présente pas une priorité plus élevée que celle de l'abonnement non 3GPP (406), pour désactiver ou pour ignorer (4061) la seconde politique de fonction ANDSF.

15. Équipement utilisateur (700) selon la revendication 14, comprenant en outre :
un second module de réactivation (21), configuré : si la seconde politique de fonction ANDSF est désactivée ou ignorée (4061), pour activer (4063) la seconde politique de fonction ANDSF après qu'une connexion au premier dispositif d'accès à un réseau WLAN a pris fin (4062).
